# EUROPEAN PATENT APPLICATION

(11) **EP 3 633 151 A1**
(43) Date of publication of application: **08.04.2020**
(21) Application number: 19196531.8
(22) Date of filing: 10.09.2019
(51) Int. Cl.: F01D 17/14, F04D 17/10, F04D 29/46

(54) **A VARIABLE GEOMETRY DIFFUSER**

(30) Priority: 05.10.2018 GB 201816268
(71) Applicant: Rolls-Royce plc, London N1 9FX (GB)
(72) Inventor: Turner, Alexander, Derby, Derbyshire DE24 8BJ (GB); Narula, Aman, Derby, Derbyshire DE24 8BJ (GB); Gregson, Maria, Derby, Derbyshire DE24 8BJ (GB); Crovetto, Jack, Derby, Derbyshire DE24 8BJ (GB)
(74) Representative: Rolls-Royce plc

(57) **Abstract**

A variable geometry diffuser (104) for a vaned centrifugal compressor (100). The variable geometry diffuser comprising a first annular element (110) and a second annular element (112) arranged to overlap each other in a radial direction, the first annular element (110) and the second annular element (112) being spaced apart in an axial direction. The variable geometry diffuser further comprising one or more diffuser vanes (114) extending in the axial direction between opposing surfaces of the first and second annular elements (110, 112), wherein the one or more diffuser vanes (114) pass through at least one of the first and second annular elements (110, 112). The variable geometry diffuser further comprising an adjustment mechanism (116) arranged to adjust the axial separation between the first and second annular elements (110, 112). A vaned centrifugal compressor (100), a gas turbine engine (10) for an aircraft and a method (300) of varying the geometry of a diffuser for a vaned centrifugal compressor are also disclosed.

## Description

### TECHNICAL FIELD

The present disclosure relates to a variable geometry diffuser. More particularly, the present disclosure relates to a variable geometry diffuser for a vaned centrifugal compressor.

### BACKGROUND

A centrifugal compressor generally comprises a rotor or impeller, a diffuser and a collector. A pressure rise in fluid flow through the compressor is achieved by adding kinetic energy to the fluid flow using the impellor, followed by slowing the flow through the diffuser to create a rise in static pressure. The resulting fluid flow from the diffuser is discharged into the collector.

In order to optimise the compressor or adjust its output the flow capacity through the diffuser can be controlled. There are a number of such methods of varying the flow through the diffuser. In some known examples, a variable diffuser is provided in which a fixed wall and an opposed movable wall define a diffuser passage between them. Other known methods of achieving variable flow in a centrifugal compressor include using a throttle ring or varying the angle of vanes used to deflect fluid flowing past them. A throttle ring may be used in the case of a vaneless diffuser.

### SUMMARY

According to a first aspect there is provided a variable geometry diffuser for a vaned centrifugal compressor, comprising: a first annular element and a second annular element arranged to overlap each other in a radial direction, the first annular element and the second annular element being spaced apart in an axial direction; one or more diffuser vanes extending in the axial direction between opposing surfaces of the first and second annular elements, wherein the one or more diffuser vanes pass through at least one of the first and second annular elements; and an adjustment mechanism arranged to adjust the axial separation between the first and second annular elements.

By adjusting the axial separation between the first and second annular elements the flow rate through the diffuser may be varied without needing to vary the angle of the diffuser vanes. This may allow the flow rate to be varied without changing the load path of the diffuser vanes, and may be implemented with minimal changes to the diffuser geometry. The use of a single actuation point may also result in fewer failure modes to improve reliability.

The variable geometry diffuser may further comprise a support member, wherein the first annular element has a fixed axial separation relative to the support member, and wherein the second annular element is movable relative to the support member.

The second annular element may be disposed between the first annular element and the support member. The one or more diffuser vanes may extend through the second annular element and may be fixedly coupled to the support member and the first annular element.

The second annular element may comprise a cover portion arranged to cover a gap between either: the second annular element and the support member; or the second annular element and the first annular element.

The cover portion may extend in the axial direction a distance greater or equal to the greatest axial separation between the second annular element and the support member or between the second annular element and the first annular element.

The variable geometry diffuser may further comprise a surge chamber fluidly coupled to a fluid flow path through the diffuser.

The surge chamber may be coupled to one of the first and second annular elements by a flexible connector. The flexible connector may be adapted to be variable in length. The flexible connector may comprise a flexible bellows.

The adjustment mechanism may comprise a mechanical linkage arranged to convert a rotational adjustment input into an axial translation of the first and/or second annular elements.

The mechanical linkage may comprise: a cam ring arranged concentrically with either or both of the first and second annular elements; and a cam follower connected to one of the first and the second annular elements.

The cam follower may be connected to one of the first and second annular elements by a pair of connecting rods. The connecting rods may be connected to points on the first or second annular element that are spaced apart in the radial direction.

The connecting rods may each be connected at or near a respective radial periphery of the first or the second annular element to which they connect.

The mechanical linkage may comprise a biasing mechanism arranged to bias the cam follower towards a cam surface of the cam ring. The biasing mechanism may comprise one or more biasing springs.

The variable geometry diffuser may further comprise one or more sealing assemblies. Each of the sealing assemblies may be arranged form a seal between one of the one or more diffuser vanes and the annular element through which it extends.

Each of the sealing assemblies may comprise a clamping portion. The clamping portion may be clamped between a first sliding plate and a second sliding plate forming the annular element through which the diffuser vane extends.

The one or more sealing assemblies may each comprises a spring energised member at least partly surrounding the diffuser vane to which a seal is formed. The spring energised member may be arranged to urge part of the respective sealing assembly against the diffuser vane to provide a seal between them.

The spring energised member may comprise one or more spring portions connected by one or more non-spring portions. The non-spring portions may be formed from a relatively non-resilient material compared to the spring portions.

The non-spring portion or portions may be provided at one or both of the leading or trailing edges of the diffuser vane to which the sealing assembly forms a seal.

Either or both of the annular elements through which the one or more diffuser vanes pass may comprise a recessed region extending at least partly around the diffuser vane. The spring energised member may be disposed within the recessed region.

The recessed region may be formed by a first aperture formed in a first side of the annular element though which the one or more diffuser vanes extend and a second aperture in a second side of the annular element though which the one or more diffuser vanes extend. The first and second apertures may be aligned relative to one another and may be arranged to receive a respective one of the diffuser vanes. The first aperture may have a different size to the second aperture thereby forming the recessed region.

Either or both of the annular elements having the recessed region may further comprise a retaining lip. The retaining lip may at least partly cover the recessed region to retain the sealing assembly therein.

According to a second aspect, there is provided a vaned centrifugal compressor comprising: an impeller having a plurality of blades; and a variable geometry diffuser according to the first aspect, wherein the impellor is rotatably mounted relative to the first and second annular elements, and wherein rotation of the impellor causes fluid flow through the variable geometry diffuser along a diffusion passage defined by the annular elements and the one or more diffuser vanes.

According to a third aspect, there is provided a gas turbine engine for an aircraft, the gas turbine engine comprising the vaned centrigual compressor according to the second aspect.

According to a fourth aspect, there is provided a method of varying the geometry of a diffuser for a vaned centrifugal compressor, the method comprising: providing the variable geometry diffuser of the first aspect; and adjusting the axial separation between the first and second annular elements to vary the geometry of a fluid flow path defined by the annular elements and the one or more diffuser vanes.

Any of the features described in the statements above in connection with the first aspect may be used in combination with any of the second, third and fourth aspects.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²).

The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BREIF DESCRIPTION OF THE DRAWINGS

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a sectional view of a vaned centrifugal compressor;
Figure 5 is a close up of region 'A' marked in Figure 4 showing a sectional view of a variable geometry diffuser of the vaned centrifugal compressor;
Figure 6 shows a cross section along line BB marked in Figure 5;
Figure 7 shows a close-up view of a cam follower and a cam ring;
Figure 8 shows a sectional view of a sealing assembly;
Figure 9 shows another sectional view of the sealing assembly shown in Figure 8 along line CC marked in Figure 8;
Figure 10 shows a sectional view of a sealing assembly according to another embodiment; and
Figure 11 shows a method of varying the geometry of a diffuser for a vaned centrifugal compressor.

### DETAILED DESCRIPTION

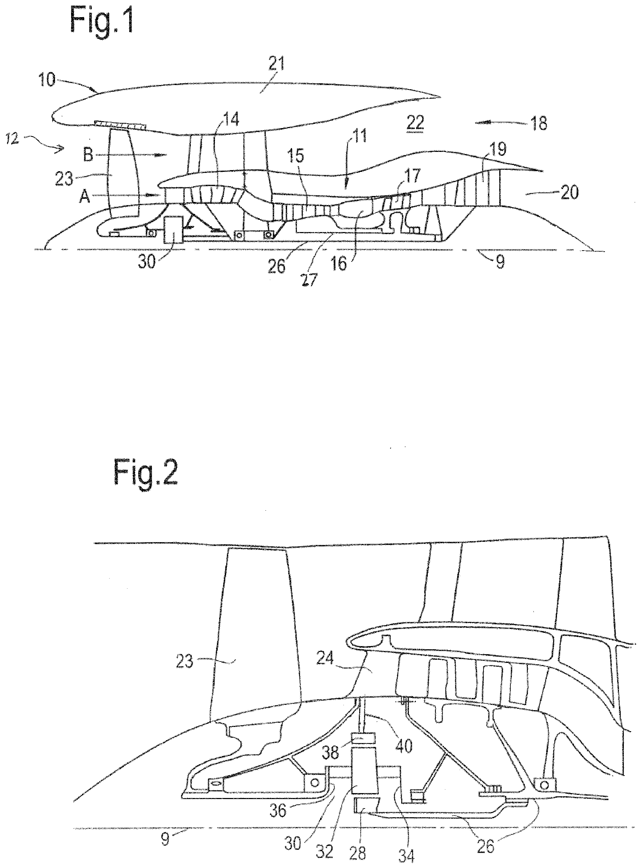

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27.

The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

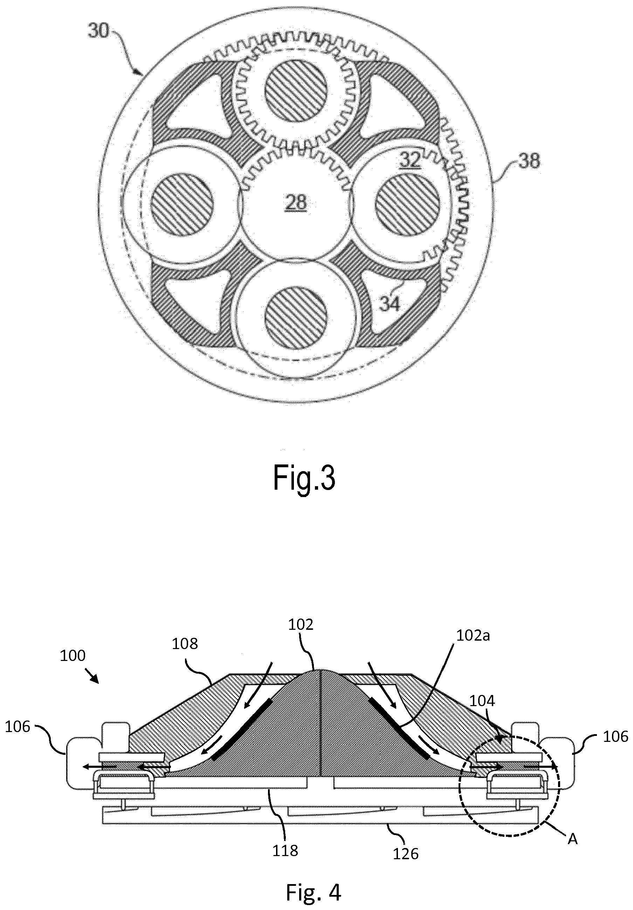

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

A vaned centrifugal compressor 100 suitable for use in the gas turbine engine 10 is shown in Figure 4. The centrifugal compressor 100 comprises: an impeller 102; a variable geometry diffuser 104; and a collector 106. The impellor 102 is arranged to receive a supply of input air from an inlet duct (not shown in the Figures). The impellor is rotatably mounted relative to a housing 108 and carries a plurality of blades 102a. Rotation of the impellor 102 causes an increase in energy of a fluid in a flow path through the compressor, shown by the arrows in Figure 4. The impellor may be mounted to a drive shaft which is driven by a suitable drive mechanism provided to power the compressor.

The diffuser 104 is disposed downstream of the impellor 102 in the fluid flow path through the compressor, and is arranged to receive a flow of energised fluid from the impellor 102. The diffuser 104 is configured to convert kinetic energy of the energised fluid into an increase in fluid pressure by slowing or diffusing the fluid flow along a diffusion path through the diffuser 104. The collector 106 lies downstream of the diffuser 104 and is arranged to collect pressurised fluid discharged by the diffuser 104. The collector 106 may take any suitable form such that it may collect fluid from the diffuser and is itself coupled to a fluid output duct of the compressor 100 (not shown in the Figures). The collector 106 may be a scroll as shown in Figure 4.

The compressor 100 may serve one of a number of different functions in the gas turbine engine 10. The compressor 100 may, for example, receive a supply of bypass airflow from the bypass duct 22. The compressed air produced by the compressor 100 may be supplied to an environmental control system of an aircraft to which the gas turbine engine 10 is mounted. The present disclosure is however, not limited to centrifugal compressors suitable for use in a gas turbine engine, and may apply to any centrifugal compressor. The centrifugal compressor may be used to compress air or any other fluid.

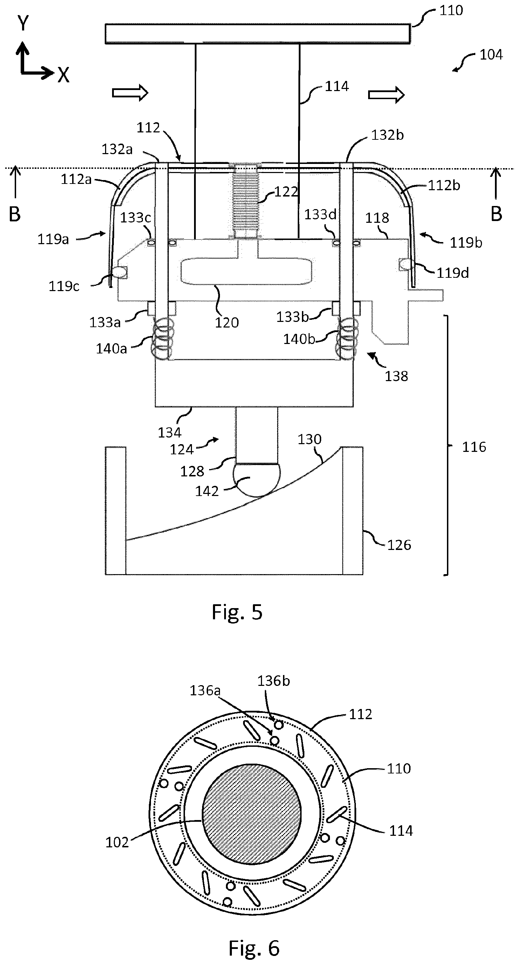

The diffuser 104 is illustrated in more detail in Figure 5, which shows a schematic close up of the region marked 'A' in Figure 4.

The diffuser 104 comprises a first annular element 110 and a second annular element 112. The first and second annular elements 110, 112 are generally concentrically aligned and are arranged to overlap each other in a radial direction (marked 'X' in Figure 5). This can be seen more clearly in the second cross section view shown in Figure 6. The first annular element 110 and the second annular element 112 are spaced apart in an axial direction (marked 'Y' in Figure 5) so as to define a diffusion passage between them. The impellor 102 is mounted rotatably relative to the annular elements 110, 112 as shown in Figure 6. The impellor may be mounted concentrically relative to the first and second annular elements 110, 112. Other geometries are however possible. For example, the annular elements may not be concentrically aligned relative to each other, and other relative orientations of the impellor may be provided.

The diffuser 104 further comprises one or more diffuser vanes 114 extending in an axial direction between opposing surfaces of the first and second annular elements 110, 112. In the described embodiment, the diffuser 104 comprises a plurality of diffuser vanes 114 disturbed azimuthally around the first and second annular elements 110, 112 as shown in Figure 6. Twelve diffuser vanes 114 are shown in Figure 6 as an example only (only one is labelled in Figure 6 to aid clarity). Any suitable number and distribution of diffuser vanes 114 may be provided. The diffuser vanes may be distributed equally or unequally as required.

The diffuser vanes 114 extend between the first and second annular elements 110, 112 and further define the diffusion passage along which fluid may diffuse through the diffuser 104 after being energised by the impellor 102.

The diffuser vanes 114 are arranged to pass through at least one of the first and second annular elements 110, 112. In the embodiment shown in Figures 4 and 5, the diffuser vanes are arranged to pass through the second annular element 112. In other embodiments, they may pass through the first annular element 110, or may path through both the first and second annular elements 110, 112.

The diffuser vanes 114 may pass through the body of the first and/or second annular elements 110, 112 via a suitable set of apertures or through holes. A sliding coupling may be provided between the diffuser vanes 114 and the annular element or elements 110, 112 through which they pass. This allows one or both of the annular elements 110, 112 to move axially by sliding with respect to the diffuser vanes 114 (e.g. the diffuser vane slides through the aperture in the annular element through which it passes).

The diffuser 104 further comprises an adjustment mechanism 116 arranged to adjust the axial separation between the first and second annular elements 110, 112. By adjusting the axial separation between the annular elements 110, 112 the size of the diffusion passage defined between them may be adjusted. This may allow the flow rate through the diffuser 104 to be controlled and optimised.

By adjusting the axial separation between the first and second annular elements 110, 112 the flow rate through the diffuser may be varied while maintaining a constant vane angle. This may allow the flow rate to be varied without changing the load path of the vanes, and may be implemented with minimal changes to the diffuser geometry. Furthermore, by providing a single actuation point there may also be fewer failure modes.

The diffuser 104 may further comprise a support member 118. The support member 118 may be formed from a generally annular member that may be arranged concentrically with the first and second annular elements 110, 112. The support member 118 may be arranged to overlap the first and second annular elements 110, 112 in the radial direction, and is spaced apart from them in the axial direction. In other embodiments, the support member may have any other suitable shape and positioning relative to the annular elements, and may be circular, rather than annular, for example.

The first annular element 110 may have a fixed axial separation relative to the support member 118. The second annular element 112 may be movable relative to the support member 118. The first annular element 110 may therefore form a stationary annular element, with the second annular element 112 forming a relatively movable annular element. The second annular element 112 may be movable relative to the support member (and the first annular element 110) by the adjustment mechanism 116. The support member 118 may therefore form part of, or act as, a base support of the compressor 100.

The second annular element 112 may be disposed between the first annular element 110 and the support member 118 as shown in Figure 5 so that they are each axially spaced apart from each other. The one or more diffuser vanes 114 may extend through the second annular element 112 such that they extend between the first annular element 110 and the support member 118. The diffuser vanes 114 may be fixedly coupled to the support member 118 and the second annular element 110. As illustrated in Figure 5, the distal ends of the diffuser vanes 114 may be fixed to the first annular element 112 and the support member 118. This may reduce the change in the load on the diffuser vanes 114 during movement of the second annular element 112, and reduce the structural changes required to implement the variable geometry diffuser 104. Any suitable fixing between the diffuser vanes 114 and the first annular element 110 and support member 118 may be provided. In some embodiments, the diffuser vanes may fit into slots in the respective surfaces of the first annular element 110 or the support member 118, or may pass through apertures in them so that they are fixed in position.

The second annular element 112 may comprise a cover portion arranged to cover a gap between the second annular element 112 and the support member 118. In the described embodiment, the second annular element 112 comprises a first cover portion 119a and a second cover portion 119b, each arranged to bridge the gap between the second annular element 112 and the support member 118. In other embodiments, only one of the cover portions 119a, 119b may be provided.

The diffusion passage through the diffuser is defined by opposing surfaces of the first and second annular elements 110, 112 and the portion of the diffuser vanes 114 extending between them (i.e. fluid flow through the diffuser passes between the first and second annular elements 110, 112). The cover portions 119a, 119b therefore act to prevent or reduce fluid flow between the second annular element 112 and the support member 118 so as to reduce loss from the diffusion passage.

In other embodiments, the cover portion or portions 119a, 119b may extend between the second annular element 112 and the first annular element 110. In that case, the diffusion passage is formed between the second annular element 112 and the support member 118.

The cover portions 119a, 119b may each extend around the circumference of the second annular element 112, and may extend from at or near the periphery of the second annular element 112 (i.e. the periphery in a radial direction across the second annular element 112). In the described embodiment, the cover portions 119a, 119b are formed integrally as part of the second annular element 112. In other embodiments, the cover portions 119a, 119b may be formed from separate components.

The second annular element 112 may be formed from a first sliding plate 112a and a second sliding plate 112b. The sliding plates 112a, 112b may overlap one another to form the second annular element 112. The separate sliding plates 112a, 112b may be provided to clamp a sealing assembly between them as will be described later. The cover portions 119a, 119b may each be formed from an extended part of the first sliding plate 112a as shown in Figure 5, or an extended part of the second sliding pate 112b. In other embodiments, the second annular element 112 may be formed from a single piece.

A sealing feature may be provided to form a seal between each of the cover portions 119a, 119b and the support member 118. The sealing feature may be formed by a first sealing member 119c extending around the inner periphery of the support member 118. The first sealing member 119c may be arranged to form a seal between the first cover portion 119a and the support member 118. A second sealing member 119d may be provided around the outer periphery of the support member 118 to form a seal with the second cover portion 119b. The first and second sealing members 119c, 119d may take any suitable form. They may be O-ring seals for example.

Each of the cover portions 119a, 119b may extend in the axial direction a distance greater or equal to the greatest axial separation between the second annular element 112 and the support member 118 (or between the second annular element 112 and the first annular element 110 if they bridge the gap between them). This may help to ensure fluid does not flow between the second annular element 112 and the support member 118 across the full range of movement of the second annular element 112.

The variable geometry diffuser 104 may further comprise a surge chamber 120 fluidly coupled to the fluid flow path through the diffuser 104. The surge chamber 120 is arranged to receive fluid flow from the diffusion passage through the diffuser 104 in the event of a stall or reversal of fluid flow. This may help to reduce the risk of backflow of fluid to the impellor 102 that may otherwise cause damage to the compressor. The surge chamber 120 may be arranged to achieve a constant fluid distribution throughout the gap between the diffuser vanes 114. It may be formed from an annular ring or cavity in the support member 118 which is connected with the diffusion passage via slots arranged between each of the diffuser vanes 114. This may prevent stall or reversal of fluids within the diffuser.

The surge chamber 120 may be coupled to one of the first and second annular elements 110, 112 by a flexible connector 122. The flexible connector 122 may be variable in length so that it may form a coupling between the first or the second annular elements 110, 112 and a stationary structure in which the surge chamber 120 is located. The surge chamber may be located in the support member 118 as shown in Figure 5 with the flexible connector 122 connecting it to the second annular element 112. In this embodiment, the surge chamber 120 may extend around part, or all, of the circumference of the annulus formed by the support member 118. Other geometries of surge chamber are however possible.

The flexible connector 122 may comprises a flexible bellows arranged to link the second annular element 112 to the surge chamber 120. The flexible bellows may change in length as the second annular element 112 moves relative to the surge chamber 120 to maintain a fluid coupling between them. In other embodiments, the surge chamber 120 may have a different location within the diffuser 104. It may, for example, be located in the first annular element 110, or other structure that is relatively stationary with respect to the movable second annular element 112.

The adjustment mechanism 116 may comprise a mechanical linkage 124 arranged to convert a rotational adjustment input into an axial translation of the first and/or second annular elements 110, 112. As illustrated in Figure 5, the adjustment mechanism may comprise a cam ring 126 arranged concentrically with the first and second annular elements 110, 112. The adjustment mechanism 116 may also comprise a cam follower 128 connected to the second annular element 112 so that it may be moved relative to the first annular element 110 and the support member 118. The cam ring 126 may comprise one or more cam surfaces 130 that are arranged to engage with the cam follower 128, the cam surfaces 130 being shaped to provide the desired axial movement upon rotation of the cam ring 126 (relative to the first and second annular elements 110, 112). The shape of the cam surface or surfaces 130 may be determined according to the desired range of axial motion of the respective annular element to which it is coupled. The use of a cam and cam follower may advantageously allow fine control of the axial separation of the annular elements 110, 112 by converting a relatively large input rotational movement into a relatively small corresponding axial output movement. In other embodiments, the cam ring may have another suitable shape or geometry relative to the annular elements 110, 112.

The cam follower 128 may be connected to one of the first and second annular elements 110, 112 by a pair of connecting rods 132a, 132b as illustrated in Figure 5. In this example, the connecting rods 132a, 132b extend through the support member 118 and couple to the second annular element 112. A linkage member 134 is further provided to link the connecting rods 132a, 132b to the cam follower 128. Bosses 133a, 133b may be provided on the support member 118 to align each of the connecting rods 132a, 132b. Each of the connecting rods 132a, 132b may be provided with a sealing member 133c, 133d arranged to form a seal between each respective connecting rod 132a, 132b and the support member 118. The sealing members 133c, 133d may be arranged to form a seal between each of the connecting rods 132a, 132b and a hole extending through the support member 118 through which each respective connecting rod extends. The sealing members 133c, 133d may be similar to the sealing members 119c, 119d provided between the cover portions 119a, 119b and the support member 118. The sealing members 133c, 133d may, for example, be O-ring seals. Other forms of sealing member may however be provided to form a seal between the connecting rods 132a, 132b and the support member 118.

The connecting rods 132a, 132b may be connected at points 136a, 136b on the second the annular element 112. The points 136a, 136b may be spaced apart in the radial direction, as illustrated in Figure 6 (where only one pair of connecting points are labelled to aid clarity). By spacing the connection of the connecting rods 132a, 132b in this way the force applied to the second annular element 112 may be spread across its surface and stresses within the second annular element 112 may be reduced. The connecting rods 132a, 132b may each connect at or near a radial periphery of the second annular element 112. This may further help to spread the force applied to the second annular element 112 by the adjustment mechanism 116.

The adjustment mechanism 116 may have a plurality of points of engagement with the second annular element. The points of engagement may be distributed azimuthally around the second annular element 112. This may help to maintain a parallel alignment between the first and second annular elements 110, 112 during relative motion between them. In the described embodiment, a plurality of pairs of connecting rods 132a, 132b may be distributed (e.g. equally distributed) around the second annular element 112. Each pair of connecting rods 132a, 132b may have a corresponding cam follower 128 and cam surface 130 distributed in a circumferential direction around the cam ring 126. This may allow force applied by the adjusting mechanism via the cam ring 126 and cam followers 128 to be distributed evenly around the second annular element 112.

The mechanical linkage 124 may further comprise a biasing mechanism 138 arranged to bias the cam follower 128 towards the cam surface 130 of the cam ring 126. The biasing mechanism 138 may be formed from one or more biasing members. In the embodiment illustrated in Figure 5, the biasing mechanism 138 comprises a first biasing spring 140a associated with the first connecting rod 132a and a second biasing spring 140b associated with the second connecting rod 132b. Each of the first and second biasing springs 140a, 140b are arranged to bias the cam follower 128 towards to the cam surface 130 to maintain engagement between them. In other embodiments, any other suitable biasing mechanism may be provided to maintain engagement between the cam follow 128 and the cam surface 130.

The cam follower 128 may comprise a ball 142 arranged to engage the cam surface 130 and form a sliding contact between them. In other embodiments, the cam follower 128 may comprise any other suitable component that may form a sliding engagement between the cam follower 128 and cam surface 130 such as a wheel or roller.

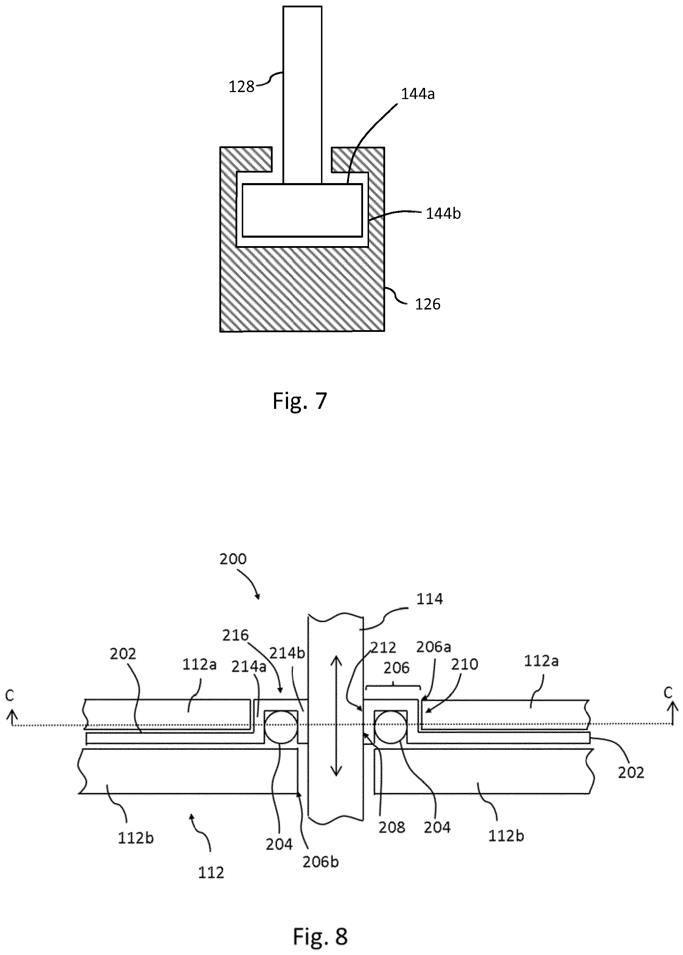

In one embodiment, the cam follower 128 may comprise an interlocking profile 144a arranged to engage with a corresponding interlocking profile 144b formed in the cam surface 130. An example of this is shown in Figure 7. The interlocking profiles 144a, 144b may act to prevent or reduce separation of the cam follower 128 and cam surface 130. This may mean that the biasing mechanism 138 is not required, or may further maintain engagement between the cam surface 130 and the cam follower 128 in addition to the interlocking profiles. In the embodiment shown in Figure 7, the interlocking profiles are formed from a 'T' shape. In other embodiments, any other suitable shape interlocking profile may be provided.

The adjustment mechanism 116 described above is only one example. In other embodiments, any other suitable adjustment mechanism may be used to provide movement of the first and second annular elements axially relative to each other. This may include other forms of mechanical linkages, electronic actuators or hydraulic actuators.

The mechanical linkage 124 described above is also only one example of a mechanical linkage that may be provided. In other embodiments, other forms of mechanical linkage providing a conversion of a rotational linear input to a linear translation of the annular element(s) 110, 112 may be used. For example, a combination of gears (e.g. a worm gear mechanism) or other suitable mechanical linkage may be used instead of the cam ring described above. In yet other embodiments, the mechanical linkage may have a linear input so that there is no conversion between a rotational input and a linear movement of the annular elements 110, 112.

The diffuser 104 may further comprise one or more sealing assemblies 200, an example of which is shown in Figure 8. Each sealing assembly may be arranged to form a seal between one of diffuser vanes 114 and the annular element 110, 112 through which that diffuser vane extends. Figure 8 shows a sealing assembly 200 forming a seal between the second annular element 112 and one of the diffuser vanes 114. Any of the features described in connection with sealing assembly 200 may also apply to a sealing assembly provided on the first annular element 110 or the support member 118 to form a seal with a diffuser vane having a sliding connection thereto.

As described above, the second annular element 112 may comprise a first sliding plate 112a and a second sliding plate 112b. The sealing assembly 200 may comprise a clamping portion 202 that is clamped between the first and second sliding plates 112a, 112b. This may help to fix the sealing assembly 200 in place and prevent deformation of the sealing assembly as the second annular element 112 slides relative to the diffuser vane 114.

The first and second sliding plates 112a, 112b may be fixed together by one or more fixing members such as one or more bolts, screws or rivets (not shown in the Figures). The fixing members may pass through the first and second sliding plates 112a, 112b to clamp them together. The fixing member or members may also pass through the clamping portion 202 of the sealing assembly 200. This may help further anchor it in position relative to the diffuser vane 114.

The sealing assembly 200 may further comprise a spring energised member 204. The spring energised member 202 may at least partly surround the respective one of diffuser vanes 114 to which it forms a sealing engagement. The spring energised member 204 may act to urge part of the sealing assembly 200 against the diffuser vane 114 to provide a seal between them. The spring energised member 202 may be formed from any suitable resilient material. It may, for example, comprise PTFE or polyimide.

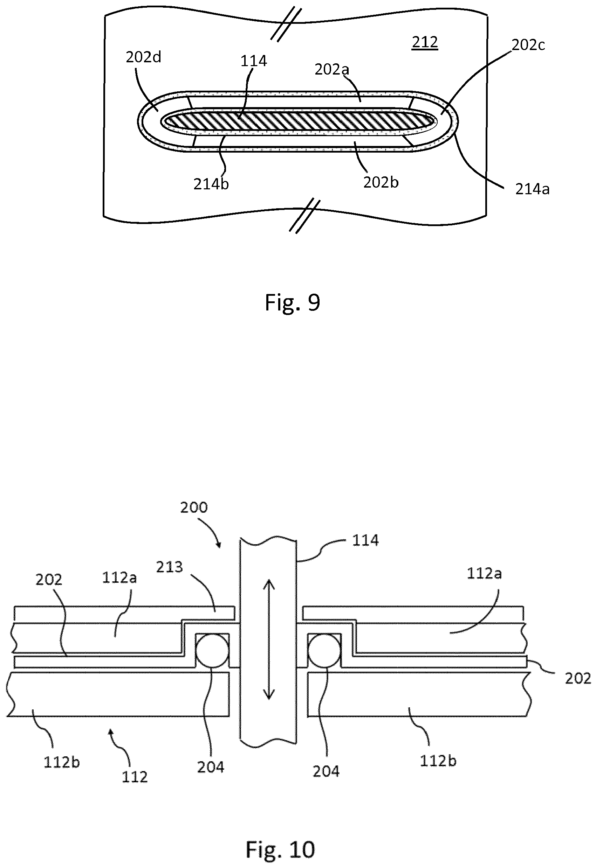

The spring energised member 204 may comprise one or more spring portions extending part way around the respective diffuser vane 114. The one or more spring portions may be connected by one or more non-spring portions. An example of this is shown in the cross section view of Figure 9, which shows a cross section through line CC marked in Figure 8. In this example, two spring portions 202a, 202b are interconnected by two non-spring portions 202c, 202d. The non-spring portions may be formed from a relatively non-resilient material that does not provide a spring action to urge the seal assembly 200 against the diffuser vane 114. The non-spring portion or portions 202c, 202d may be provided at either or both of the leading and trailing edges of the diffuser vane 114 (i.e. at a tapered region of the diffuser vane where it has a reduced thickness). In other embodiments, any other suitable number of spring portions and non-spring portions may be provided. In some embodiments, there may be no non-spring portions and the spring part of the spring member may extend all of the way around the diffuser vane.

The spring energised member 204 may be disposed in a recessed region 206 of the second annular element 112. The recessed region 206 may extend at least partly around the periphery of the aperture in the second annular element 112 through which the diffuser vane 114 extends (i.e. at least partly around the diffuser vane). The spring energised member 204 is disposed within the recessed region 206 such that it lies between a contact surface 208 of the diffuser vane 114 and an abutment surface 210 of the recessed region 206. Expansion of the spring energised member 204 acts on the abutment surface 210 such that a sealing surface 212 of the seal assembly 200 is urged against the contact surface 208 of the diffuser vane 114 to maintain the seal between them.

The recessed region 206 may be provided on the surface of the second annular element 112 opposite to the surface forming part of the diffusion passage through the diffuser. The spring energised member 204 may therefore be located on or in the opposite side of the second annular element to that which forms part of the diffusion passage.

The first and second plates 112a, 112b may each comprise one or more aligned apertures 206a, 206b arranged to receive the one or more vanes 114. A through aperture in the second annular element 112 is therefore formed for each diffuser vane 114 that passes through it. The recessed portion 206 may be formed by a difference in size between an aperture 206a on the first sliding plate 112a and an aperture 206b on the second sliding plate 112b. In the example shown in Figure 8, the aperture 206a on the first sliding plate 112a is larger than the aperture 206b on the second sliding late 112a so as to form the recessed portion 206 around the diffuser vane 114. In other embodiments, the recessed region 206 may be formed in the surface of the second annular element 112b. It may, for example, be machined into the second annular element 112 around the edge of the hole through which the diffuser vane 114 passes. The first and second apertures 112a, 112b may also be formed in opposing sides of the second annular element 112 in embodiments where it is formed from a single piece rather than separate sliding plates.

The second annular element 112 may further comprise a retaining lip 213 as shown in Figure 10. The retaining lip 213 may at least partly cover the recessed region 206 of the second annular element 112 and may act to retain the sealing assembly 200 within the recessed region 206. This may further help to prevent the sealing assembly 200 being deformed as the diffuser vane 114 slides relative to the second annular element 112.

Referring again to Figure 8, the sealing assembly 200 may comprise a pair of contact portions 214a, 214b that are spaced apart by the spring energised member 204. Expansion of the spring energised member 204 urges the contact portions 214a, 214b apart so that they press against the abutment surface 210 of second annular element 112 and the contact surface 208 of the diffuser vane 114. The contact portions 214a, 214b may be joined together to form a contact element 216 having a U-shaped cross section as shown in Figure 8.

In the described embodiment, the spring energised member 204 and the contact element 216 are formed from separate components. In other embodiments, the contact element 216 may be integrally formed with the spring energised member 204.

In the described embodiment, the clamping portion 204 is formed integrally with the contact element 216. In other embodiments, they may however be provided as separate components.

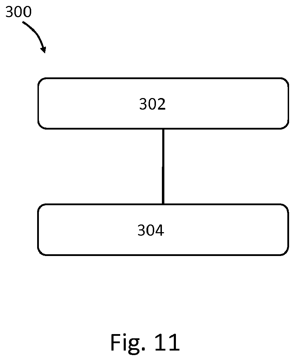

Figure 11 illustrates a method 300 of varying the geometry of a diffuser for a vaned centrigual compressor using the diffuser 104 described herein. The method comprises providing 302 the diffuser 104 of any embodiment described herein. The method further comprises adjusting 304 the axial separation between the first and second annular elements to vary the geometry of a fluid flow path defined by the annular elements and the one or more diffuser vanes. The diffuser provided in the method 300 may have any of the features defined in relation to any exemplary embodiment disclosed herein.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A variable geometry diffuser (104) for a vaned centrifugal compressor (100), comprising:
a first annular element (110) and a second annular element (112) arranged to overlap each other in a radial direction, the first annular element (110) and the second annular element (112) being spaced apart in an axial direction;
one or more diffuser vanes (114) extending in the axial direction between opposing surfaces of the first and second annular elements (110, 112), wherein the one or more diffuser vanes (114) pass through at least one of the first and second annular elements (110, 112); and
an adjustment mechanism (116) arranged to adjust the axial separation between the first and second annular elements (110, 112).

2. A variable geometry diffuser (104) according to claim 1, further comprising a support member (118), wherein the first annular element (110) has a fixed axial separation relative to the support member (118), and wherein the second annular element (112) is movable relative to the support member (118).

3. A variable geometry diffuser (104) according to claim 2, wherein the second annular element (112) is disposed between the first annular element (110) and the support member (118), and wherein the one or more diffuser vanes (114) extend through the second annular element (112) and are fixedly coupled to the support member (118) and the first annular element (110).

4. A variable geometry diffuser (104) according to claim 2 or claim 3, wherein the second annular element (112) comprises a cover portion (119a, 119b) arranged to cover a gap between either: the second annular element (112) and the support member (118); or the second annular element (112) and the first annular element (110).

5. A variable geometry diffuser (104) according to any preceding claim, further comprising a surge chamber (120) fluidly coupled to a fluid flow path through the diffuser (104), and optionally:
wherein the surge chamber (120) is coupled to one of the first and second annular elements (110, 112) by a flexible connector (122), the flexible connector adapted to be variable in length, wherein the flexible connector (122) optionally comprises a flexible bellows.

6. A variable geometry diffuser (104) according to any preceding claim, wherein the adjustment mechanism (116) comprises a mechanical linkage (124) arranged to convert a rotational adjustment input into an axial translation of the first and/or second annular elements (110, 112), wherein the mechanical linkage (124) comprises:
a cam ring (126) arranged concentrically with either or both of the first and second annular elements (110, 112); and
a cam follower (128) connected to one of the first and the second annular
elements (110, 112).

7. A variable geometry diffuser (104) according to claim 6, wherein the cam follower (128) is connected to one of the first and second annular elements (110, 112) by a pair of connecting rods (132a, 132b), wherein the connecting rods (132a, 132b) are connected to points (136a, 136b) on the first or second annular element (110, 112) that are spaced apart in the radial direction.

8. A variable geometry diffuser (104) according to claim 7, wherein the connecting rods (132a, 132b) are each connected at or near a respective radial periphery of the first or the second annular element (110, 112) to which they connect.

9. A variable geometry diffuser (104) according to claim 6 or claim 7 or claim 10, wherein the mechanical linkage (124) comprises a biasing mechanism (138) arranged to bias the cam follower (128) towards a cam surface (130) of the cam ring (126), wherein the biasing mechanism (138) optionally comprises one or more biasing springs (140a, 140b).

10. A variable geometry diffuser (104) according to any preceding claim, further comprising one or more sealing assemblies (200), wherein each sealing assembly (200) is arranged form a seal between one of the one or more diffuser vanes (114) and the annular element (110, 112) through which it extends.

11. A variable geometry diffuser (104) according to claim 12, wherein each of the sealing assemblies (200) comprises a clamping portion (202), wherein the clamping portion (202) is clamped between a first sliding plate (112a) and a second sliding plate (112b) forming the annular element (110, 112) through which the diffuser vane (114) extends.

12. A variable geometry diffuser (104) according to claim 10 or claim 11, wherein the one or more sealing assemblies (200) each comprises a spring energised member (204) at least partly surrounding the diffuser vane (114) to which a seal is formed, the spring energised member (202) being arranged to urge part of the respective sealing assembly (200) against the diffuser vane (114) to provide a seal between them, and optionally:
wherein the spring energised member (202) comprises one or more spring portions (202a, 202b) connected by one or more non-spring portions (202c, 202d), wherein the non-spring portions (202c, 202d) are formed from a relatively non-resilient material compared to the spring portions (202a, 202b), and further optionally:
wherein the non-spring portion or portions (202c, 202d) are provided at one or both of the leading or trailing edges of the diffuser vane (114) to which the sealing assembly forms a seal.

13. A variable geometry diffuser (104) according to claim 12, wherein either or both of the annular elements (110, 112) through which the one or more diffuser vanes (114) pass comprises a recessed region (206) extending at least partly around the diffuser vane (114), and wherein the spring energised member (202) is disposed within the recessed region (206).

14. A variable geometry diffuser (104) according to claim 13, wherein the recessed region (206) is formed by a first aperture (206a) formed in a first side of the annular element (110, 112) though which the one or more diffuser vanes (114) extend and a second aperture (206b) in a second side of the annular element (110, 112) though which the one or more diffuser vanes (114) extend, the first and second apertures (206a, 206b) being aligned relative to one another and arranged to receive a respective one of the diffuser vanes (114), and wherein the first aperture (206a) has a different size to the second aperture (206b) thereby forming the recessed region (206).

15. A variable geometry diffuser (104) according to claim 13 or claim 14, wherein either or both of the annular elements (110, 112) having the recessed region (206) further comprises a retaining lip (208), the retaining lip (208) at least partly covering the recessed region (206) to retain the sealing assembly (200) therein.
